# EUROPEAN PATENT SPECIFICATION

(11) **EP 0 638 102 B1**
(45) Date of publication and mention of the grant of the patent: **16.07.1997**
(21) Application number: 93912318.8
(22) Date of filing: 19.04.1993
(51) Int. Cl.: C08G 63/54, C08L 67/06, C08L 101/00, C08K 11/00

(54) **THERMALLY STABLE POLYESTERS CONTAINING TRANS-4,4'-STILBENEDICARBOXYLIC ACID**
THERMISCH STABILE POLYESTER DIE TRANS-4,4'-STILBENDICARBONSÄURE ENTHALTEN
POLYESTERS THERMIQUEMENT STABLES CONTENANT DE L'ACIDE TRANS-4,4'-STILBENEDICARBOXYLIQUE

(30) Priority: 30.04.1992 US 875956
(43) Date of publication of application: 15.02.1995
(73) Proprietor: EASTMAN CHEMICAL COMPANY, Kingsport, TN 37660 (US)
(72) Inventor: MORRIS, John, Craft, Kingsport, TN 37664 (US)
(74) Representative: Wibbelmann, Jobst, Dr., Dipl.-Chem.
(86) International application number: US9303674
(87) International publication number: WO9322363

(56) References cited:
- EP-A- 0 022 752
- EP-A- 0 183 141
- US-A- 4 739 033
- US-A- 4 956 448
- DATABASE WPI Derwent Publications Ltd., London, GB; AN 90-104302 (14)

## Description

### Field of the Invention

The present invention relates to isotropic polyesters containing repeating units prepared from trans- or cis-1,4-cyclohexanedicarboxylic acid, 1,4-butanediol, and minor amounts of trans-4,4'-stilbenedicarboxylic acid.

### Background of the Invention

U.S. 4,459,402 discloses copolyesters of 20-80 mol % trans-4,4'-stilbenedicarboxylic acid, 80-20 mol % terephthalic acid and/or 80-20 mol % 2,6-naphthalenedicarboxylic acid and 100 mol % 1,4-butanediol having exceptionally high tensile strength. U.S. 4,414,382 discloses polyesters based on 90-55 mol % 2,6-naphthalenedicarboxylic acid, 10-45 mol % trans-4,4'-stilbenedicarboxylic acid, and 100 mol % ethylene glycol. U.S. 4,526,822 discloses a polyester of terephthalic acid and ethylene glycol modified with 10-40 mol % trans-4,4'-stilbenedicarboxylic acid.

Japanese Kokai 72348/74 discloses blends of poly(1,4-butylene terephthalate) and a polyester having an aromatic dicarboxylic acid content that has at least 55 mol % trans-4,4'-stilbenedicarboxylic acid.

JP-A-0022752 discloses copolyesters containing trans-1,4-cyclohexanedicarboxylic acid and butanediol as the main constituents in combination with up to 10 mole % of a further diacid other than dimethyl 1,4-cyclohexanedicarboxylic acid.

Heretofore, copolyesters prepared from 1,4-butanediol, minor amounts of trans-4,4'-stilbenedicarboxylic acid and trans- or cis-1,4-cyclohexanedicarboxylic acid were not known.

### Summary of the Invention

The present invention is directed to a copolyester having improved thermal stability comprising:
(A) acid repeating units from
   (1) at least 80 mol % of an acid component of dimethyl trans- or cis-1,4-cyclohexanedicarboxylic acid, and
   (2) greater than 0 but less than 20 mol % acid component of trans-4,4'-stilbenedicarboxylic acid, wherein up to 10 mol % can be substituted with an additional aromatic dicarboxylic acid;
(B) glycol repeating units from 1,4-butanediol, wherein up to 10 mol % can be substituted with another glycol containing 2 - 16 carbon atoms;
wherein the total mol % of acid repeating units and glycol repeating units are each 100 mol %; said copolyester having an inherent viscosity greater than 0.2, determined at 25°C in 25/35/40 (wt./wt./wt.) phenol, tetrachloroethane/p-chlorophenol at a concentration of 0.1 g/100 mL and a melting point of at least 200°C.

### Detailed Description of the Invention

The copolyesters of the present invention are useful in molding plastics, fibers, and films and have unexpectedly improved thermal stability in the melt. The polyesters of the present invention prepared from 1,4-butanediol, and trans- or cis-1,4-cyclohexanedicarboxylic acid or its esters have greatly enhanced melt stability when modified with up to 20 mol % of trans-4,4'-stilbenedicarboxylic acid (SDA).

Minor amounts, i.e., as little as 5 mol % and below, of SDA component in the copolyester of the present invention reduce thermal degradation, i.e. thus improve the thermal degradation rate constant compared to the unmodified homopolymer of 1,4-cyclohexanedicarboxylic acid and 1,4-butanediol. At 260°C, as little as 2 mol % of SDA results in a copolyester with a thermal degradation rate constant one-half that of the unmodified homopolymer. Increasing the SDA content to 10 mol % further reduces the thermal degradation rate constant compared to the unmodified homopolymer. However, increasing the SDA content to greater than 10 mol % begins to reduce the polymer melting point, and above 20 mol % the melting point is at an unacceptably low temperature for injection molding into useful parts.

The copolyesters of the present invention generally comprise (A) acid repeating units from (1) at least 80 mol % of an acid component of trans- or cis-1,4-cyclohexanedicarboxylic acid , preferably having greater than 90 mol % of the trans isomer content, more preferably greater than 95 mol % with a constant greater than 98% of the trans isomer being most preferred, and (2) less than 20 mol %; preferably less than 10 mol %, acid repeating units of trans-4,4'-stilbenedicarboxylic acid; and (B) glycol repeating units up to 100 mol % 1,4-butanediol.

The repeating units of the copolyesters of the present invention preferably comprise 81 to 98 mol % trans- or cis-1,4-cyclohexanedicarboxylic acid, 2 to 19 mol % trans-4,4'-stilbenedicarboxylic acid and 100 mol % 1,4-butanediol. The repeating units of the copolyesters of the present invention more preferably comprise 90 to 95 mol % trans- or cis-1,4-cyclohexanedicarboxylic acid, 5 to 10 mol % trans-4,4'-stilbenedicarboxylic acid and 100 mol % 1,4-butanediol.

Dicarboxylic acids or diesters of the dicarboxylic acids may be used to prepare the polymer esters of the present invention. Suitable esters include the esters of methyl, ethyl, propyl, butyl, phenyl and mixed esters thereof.

Copolyesters of the present invention can be prepared by conventional melt processes.

In the copolyester of the present invention, the acid repeating units of (A) above can be substituted with up to 10 mol %, preferably no more than 5 mol % of an additional aromatic dicarboxylic acid. Examples of suitable aromatic dicarboxylic acids include 4,4'-biphenyldicarboxylic acid. 1,5-, 2,6-, 2,7-naphthalenedicarboxylic, or 4,4'-oxydibenzoic acid.

The 1,4-butanediol, i.e., glycol portion of the copolyesters of the present invention can be substituted with up to 10 mol % of another glycol containing 2-16 carbon atoms. Examples of suitable glycols include 1,3-propanediol, neopentyl glycol, trans- or cis-2,2,4,4-tetramethyl-1,3-cyclobutanediol, 1,5-pentanediol, 1,6-hexanediol, trans- or cis-1,4-cyclohexanedimethanol and p-xylene. These copolyesters can also be modified by the incorporation of units from polyethylene glycols or polytetramethylene glycols to enhance elastomeric behavior.

The copolyesters of the present invention preferably have an inherent viscosity of at least 0.2, determined at 25°C in 25/35/40 (wt./wt./wt.) phenol/tetrachloroethane/p-chlorophenol at a concentration of 0.1 g/100 mL, more preferably at least 0.6 or more. The copolyesters of the present invention also preferably have a degradation rate constant less than 3.8 x 10⁻⁴ at 260°C.

The copolyesters of the present invention can be further modified by the incorporation of blend modifiers. This composition can comprise:
(i) 95 to 5 weight percent of the copolyester and
(ii) 5 to 95 weight percent of at least one property modifier.

Preferably (i) is present in an amount of 90 to 10 weight percent, and (ii) is present in an amount of 10 to 90 weight percent.

Examples of suitable blend or property modifiers include polyamides such as Nylon 6,6 from DuPont, poly(ether-imides) such as Ultem Brand poly(ether-imide) from General Electric, polyphenylene oxides, such as poly(2,6-dimethylphenylene oxide) or poly(phenylene oxide)/polystyrene blends such as the Noryl Brand resins from General Electric, other polyesters, polyphenylene sulfides, polyphenylene sulfide/sulfones, poly(ester-carbonates), polycarbonates such as Lexan Brand polycarbonate from General Electric, polysulfones, polysulfone ethers, and poly(ether-ketones) of aromatic dihydroxy compounds. Suitable dihydroxy compounds used to prepare these modified polyesters are disclosed in U.S. Patents 3,030,335 and 3,317,466.

The copolyesters of the present invention can also contain conventional flame retardants, such as phosphorus or halogen compounds; fillers, such as talc, or mica; reinforcing agents such as glass fiber, Kevlar Brand fiber from DuPont, carbon fibers, and the like.

The following examples are to illustrate the present invention but should not be interpreted as a limitation thereof.

### Examples

These examples illustrate the unobvious thermal stabilization of aliphatic dicarboxlic acid/aliphatic glycol polyesters of 1,4-cyclohexanedicarboxylic acid and 1,4-butanediol with a minor amount of trans-4,4'-stilbenedicarboxylic acid (See Table 1).

### Example 1 (comp. example)

This example illustrates the preparation and determination of melt stability of the homopolyester containing 100 mol % trans-1,4-cyclohexanedicarboxylic acid units and 100 mol % 1,4-butanediol units.

A mixture of 100 g (0.50 mol) dimethyl trans-1,4-cyclohexanedicarboxylate and 90 g (1.00 mols) 1,4-butanediol (100 mol % excess) and 0.07 g titanium tetraisopropoxide was placed in 500-mL flask equipped with an inlet for nitrogen, a metal stirrer, and a short distillation column. The flask was placed in a Wood's metal bath already heated at 200°C for 3.5 hours and then the temperature was raised to 260°C for 15 minutes. A vacuum of 0.5 mm was gradually applied over the next 5-10 minutes. Full vacuum was maintained for 2.5 hours. A high melt viscosity, crystalline polymer was obtained with and I.V. of 1.20 and a melting endotherm measured by DSC at 160°C.

The polymer was ground to pass a 3-mm screen, dried and the thermal degradation rate constant was determined to be 1.77 x 10⁴ (poise)^{-2.94}*sec⁻¹ [(dyne/cm2)^{-2.94}*sec⁻¹)] at 240°C and 3.72 x 10⁴ (poise)^{-2.94}*sec⁻¹ [(dyne/cm2)^{-2.94}*sec⁻¹)] at 260°C.

### Example 2

This example illustrates the preparation and determination of melt stability of the copolyester containing 90 mol % 1,4-cyclohexanedicarboxylic acid (99 % trans) units, 10 mol % trans-4,4'-stilbenedicarboxylic acid units, and 100 mol % 1,4-butanediol units.

A mixture of 90 g (0.45 mol) dimethyl 1,4-cyclohexanedicarboxylate (98 % trans), 14.8 g (0.05 mol) dimethyl trans-4,4'-stilbenedicarboxylate, and 90 g (1.00 mols) 1,4-butanediol (100 mol % excess) and 0.07 g titanium tetraisopropoxide was placed in a 500 mL flask equipped with an inlet for nitrogen, a metal stirrer, and a short distillation column. The flask was placed in a Wood's metal bath already heated at 200°C for 4.75 hours and then the temperature was raised to 260°C for 15 minutes. A vacuum of 0.5 mm was gradually applied over the next 5-10 minutes. Full vacuum was maintained for 2 hours. A high melt viscosity, crystalline polymer was obtained with an I.V. of 1.36 and a melting endotherm measured by DSC at 156°C.

The polymer was ground to pass a 3-mm screen, dried and the thermal degradation rate constant was determined to be -3.9 x 10⁵ (poise)^{-2.94}*sec⁻¹ [(dyne/cm2)^{-2.94}*sec⁻¹)] at 240°C and -1.21 x 10⁴ (poise)^{-2.94}*sec⁻¹ [(dyne/cm2)^{-2.94}*sec⁻¹)] at 260°C.

**TABLE I**

| Effect of trans-4,4'-Stilbenedicarboxylic Acid on the Thermal Degradation Rate Constant of Polyesters of Trans-Cis-1,4-Cyclohexanedicarboxylic Acid and acid 1,4 butanediol | | |
|---|---|---|
| SDA Content, Mol % | Thermal Degradation Rate Constant, x 10-4* | |
| | 240°C | @ 260°C |
| 0 | 1.77 | 3.72 |
| 10 | -0.39 | -1.21^{A} |

| | | |
|---|---|---|
| ^{A} A negative degradation constant suggests a positive slope for the curve of the degradation rate constant indicating the polymer has been thermally stabilized and is not thermally degrading. | | |
| *(poise)^{-2.94}*sec⁻¹ [(dyne/cm2)^{-2.94}*sec⁻¹)] | | |

## Claims

1. A copolyester having improved thermal stability comprising:
(A) acid repeating units from
(1) at least 80 mol % of an acid component of dimethyl trans- or cis-1,4-cyclohexanedicarboxylic acid, and
(2) greater than 0 but less than 20 mol % acid component of trans-4,4'-stilbenedicarboxylic acid, wherein up to 10 mol % can be substituted by an additional aromatic dicarboxylic acid;
(B) glycol repeating units from 1,4-butanediol, wherein up to 10 mol % can be substituted by another glycol containing 2 - 16 carbon atoms;
wherein the total mol % of acid repeating units and glycol repeating units are each 100 mol %; said copolyester having an inherent viscosity greater than 0.2, determined at 25°C in 25/35/40 (wt./wt./wt.) phenol, tetrachloroethane/p-chlorophenol at a concentration of 0.1 g/100 mL and a melting point of at least 200°C.

2. The copolyester of Claim 1 wherein the acid repeating units from trans- or cis-1,4-cyclohexanedicarboxylic acid are present in the amount of 81 to 98 mol % at a trans isomer content of a least 90 mol % and the acid repeating units from trans-4,4,'-stilbenedicarboxylic acid are present in the amount of 2 to 19 mol %.

3. The copolyester of Claim 2 wherein the acid repeating units from trans- or cis-1,4-cyclohexanedicarboxylic acid component (1) are present in the amount of 90 to 95 mol % and the repeating units from trans-4,4'-stilbenedicarboxylic acid are present in the amount of 10 to 5 mol %.

4. The copolyester of Claim 1 wherein the glycol repeating units from 1,4-butanediol are present in the amount of 100 mol %.

5. The copolyester of Claim 1 wherein said acid repeating units are from trans- or cis-1,4-cyclohexanedicarboxylic acid, trans-4,4'-stilbenedicarboxylic acid, and up to 10 mol % of at least one other aromatic dicarboxylic acid.

6. The copolyester of Claim 5 wherein said other aromatic dicarboxylic acid is selected from 4,4'-biphenyldicarboxylic, 1,5-, 1,6-, 2,7-naphthalenedicarboxylic, and 4,4'-oxydibenzoic acid.

7. The copolyester of Claim 1 wherein said glycol repeating units are from 1,4-butanediol and up to 10 mol % of at least one other glycol having 2 to 16 carbon atoms.

8. The copolyester of Claim 7 wherein said other glycol is selected from 1,3-propanediol, neopentyl glycol, cis-2,2,4,4-tetramethyl-1,3-cyclobutanediol, trans-2,2,4,4-tetramethyl-1,3-cyclobutanediol, trans-1,5-pentanediol, 1,6-hexanediol, cis-1,4-cyclohexanedimethanol, trans-1,4-cyclohexanedimethanol, p-xylene glycol, polyethylene glycols, and polytetramethylene glycols.

9. A composition comprising :
(i) 95 to 5 weight percent of the polyester of Claim 1, and
(ii) 5 to 95 weight percent of at least one property modifier.

10. The composition according to Claim 9 wherein (i) is present in an amount of 90 to 10 weight percent, and (ii) is present in an amount of 10 to 90 weight percent.

11. The composition according to Claim 9 wherein the property modifier is selected from nylon 6,6, poly(ether-imides), polyphenylene oxides, poly(phenylene oxide)/polystyrene blends, other polyesters, polyphenylene sulfides, polyphenylene sulfide/sulfones, poly(ester-carbonates), polycarbonates, polysulfones, polysulfone ethers, and poly(ether-ketones) of aromatic dihydroxy compounds.

12. The composition according to Claim 9 wherein the property modifier is selected from flame retardants, fillers, and reinforcing agents.

13. The composition according to Claim 9 wherein the property modifier is selected from flame retardant phosphorus compounds, flame retardant halogen compounds, talc, mica, glass fibers, Kevlar fibers, and carbon fibers.

14. A fiber comprising the polyester of Claim 1.

15. A film comprising the polyester of Claim 1.

16. A molded object comprising the polyester of Claim 1.

## Patentansprüche

1. Copolyester mit verbesserter thermischer Stabilität, umfassend:
(A) wiederkehrende Säureeinheiten aus
(1) mindestens 80 mol-% eines Säurebestandteils aus Dimethyl-trans- oder cis-1,4-cyclohexandicarbonsäure und
(2) mehr als 0 aber weniger als 20 mol-% Säurebestandteil aus trans-4,4'-Stilbendicarbonsäure, wobei bis zu 10 mol-% durch eine zusätzliche aromatische Dicarbonsäure ersetzt sein kann;
(B) wiederkehrende Glykoleinheiten aus 1,4-Butandiol, wobei bis zu 10 mol-% durch ein anderes Glykol mit 2 bis 16 Kohlenstoffatomen ersetzt sein kann;
wobei der Gesamtmolprozentsatz der wiederkehrenden Säureeinheiten und wiederkehrenden Glykoleinheiten jeweils 100 mol-% ist; der Copolyester hat eine inhärente Viskosität größer als 0,2, bestimmt bei 25°C in 25/35/40 (Gew./Gew./Gew.) Phenol/Tetrachlorethan/p-Chlorphenol bei einer Konzentration von 0,1 g/100 ml, und einen Schmelzpunkt von mindestens 200°C.

2. Copolyester nach Anspruch 1, worin die wiederkehrende Säureeinheiten aus trans- oder cis-1,4-Cyclohexandicarbonsäure in einer Menge von 81 bis 98 mol-% vorhanden sind bei einem trans-Isomerengehalt von mindestens 90 mol-%, und die wiederkehrenden Säureeinheiten aus trans-4,4'-Stilbendicarbonsäure sind in einer Menge von 2 bis 19 mol-% vorhanden.

3. Copolyester nach Anspruch 2, worin die wiederkehrenden Säureeinheiten aus trans- oder cis-1,4-Cyclohexandicarbonsäure-Bestandteil (1) in einer Menge von 90 bis 95 mol-% vorhanden sind und die wiederkehrenden Einheiten aus trans-4,4'-Stilbendicarbonsäure sind in einer Menge von 10 bis 5 mol-% vorhanden.

4. Copolyester nach Anspruch 1, worin die wiederkehrenden Glykoleinheiten aus 1,4-Butandiol in einer Menge von 100 mol-% vorhanden sind.

5. Copolyester nach Anspruch 1, worin die wiederkehrenden Säureeinheiten trans- oder cis-1,4-Cyclohexandicarbonsäure, trans-4,4'-Stilbendicarbonsäure und bis zu 10 mol-% einer anderen aromatischen Dicarbonsäure sind.

6. Copolyester nach Anspruch 5, worin die andere aromatische Dicarbonsäure ausgewählt ist aus 4,4'-Biphenyldicarbonsäure, 1,5-, 1,6-, 2,7-Naphthalendicarbonsäure und 4,4'-Oxydibenzoesäure.

7. Copolyester nach Anspruch 1, worin die wiederkehrende Glykoleinheiten 1,4-Butandiol und bis zu 10 mol-% mindestens eines anderen Glykols mit 2 - 16 Kohlenstoffatomen sind.

8. Copolyester nach Anspruch 7, worin das andere Glykol ausgewählt ist aus 1,3-Propandiol, Neopentylglykol, cis-2,2,4,4-Tetramethyl-1,3-cyclobutandiol, trans-2,2,4,4-Tetramethyl-1,3-cyclobutandiol, trans-1,5-Pentadiol, 1,6-Hexandiol, cis-1,4-Cyclohexandimethanol, trans-1,4-Cyclohexandimethanol, p-Xylenglykol, Polyethylenglykole und Polytetramethylenglykole.

9. Zusammensetzung, umfassend:
(i) 95 bis 5 Gew.-% eines Polyester nach Anspruch 1, und
(ii) 5 bis 95 Gew.-% mindestens eines Eigenschaftenmodifizierers.

10. Zusammensetzung nach Anspruch 9, worin (i) in einer Menge von 90 bis 10 Gew.-% und (ii) in einer Menge von 10 bis 90 Gew.-% vorhanden sind.

11. Zusammensetzung nach Anspruch 9, worin der Eigenschaftsmodifizierer ausgewählt ist aus Nylon-6,6, Polyetherimiden, Polyphenylenoxiden, Polyphenylenoxid Polystyren-Mischungen, andere Polyester, Polyphenylensulfide, Polyphenylensulfide/sulfone, Polyestercarbonate, Polycarbonate, Polysulfone, Polysulfonether und Polyetherketone aromatischer Dihydroxyverbindungen.

12. Zusammensetzung nach Anspruch 9, worin der Eigenschaftsmodifizierer ausgewählt ist aus Flammenhemmstoffen, Füllmitteln und verstärkenden Mitteln.

13. Zusammensetzung nach Anspruch 9, worin der Eigenschaftsmodifizierer ausgewählt ist aus flammenhemmenden Phosphorverbindungen, flammenhemmenden Halogenverbindungen, Talk, Mica, Glasfasern, Kevlar-Fasern und Kohlenstoffasern.

14. Faser umfassend den Polyester nach Anspruch 1.

15. Folie umfassend den Polyester nach Anspruch 1.

16. Geformter Gegenstand umfassend den Polyester nach Anspruch 1.

## Revendications

1. Copolyester ayant une stabilité thermique améliorée, comprenant :
(A) des motifs répétitifs acides constitués de :
(1) au moins 80 % en moles d'un composant acide de l'acide diméthyl-trans- ou -cis-1,4-cyclohexanedicarboxylique, et
(2) de 0 à 20 % en moles, limites exclues, d'un composant acide de l'acide trans-4,4'-stilbènedicarboxylique, jusqu'à 10 % en moles pouvant être remplacés par un acide dicarboxylique aromatique supplémentaire ;
(B) des motifs répétitifs glycols constitués de 1,4-butanediol, dans lesquels jusqu'à 10 % en moles peuvent être remplacés par un autre glycol contenant de 2 à 16 atomes de carbone ;
dans lequel le pourcentage molaire total des motifs répétitifs acides et des motifs répétitifs glycols est de 100 % en moles chaque ; ledit copolyester ayant une viscosité inhérente supérieure à 0,2, déterminée à 25°C dans un mélange 25/35/40 (en poids) de phénol, de tétrachloroéthane et de p-chlorophénol à une concentration de 0,1 g/100 ml, et un point de fusion d'au moins 200°C.

2. Copolyester selon la revendication 1, dans lequel les motifs répétitifs acides de l'acide trans- ou cis-1,4-cyclohexanedicarboxylique sont présents en une quantité comprise entre 81 et 98 % en moles, la teneur en isomères trans étant d'au moins 90 % en moles, et les motifs répétitifs acides de l'acide trans-4,4'-stilbènedicarboxylique sont présents en une quantité comprise entre 2 et 19 % en moles.

3. Copolyester selon la revendication 2, dans lequel les motifs répétitifs acides du composant acide trans- ou cis-1,4-cyclohexanedicarboxylique (1) sont présents en une quantité comprise entre 90 et 95 % en moles et les motifs répétitifs de l'acide trans-4,4'-stilbènedicarboxylique sont présents en une quantité comprise entre 10 et 5 % en moles.

4. Copolyester selon la revendication 1, dans lequel les motifs répétitifs glycols du 1,4-butanediol sont présents en une quantité de 100 % en moles.

5. Copolyester selon la revendication 1, dans lequel lesdits motifs répétitifs acides dérivent de l'acide trans- ou cis-1,4-cyclohexanedicarboxylique, de l'acide trans-4,4'-stilbènedicarboxylique, et de jusqu'à 10 % d'au moins un autre acide dicarboxylique aromatique.

6. Copolyester selon la revendication 5, dans lequel ledit autre acide dicarboxylique aromatique est choisi parmi l'acide 4,4'-biphényldicarboxylique, l'acide 1,5-, 1,6- ou 2,7-naphtalènedicarboxylique, et l'acide 4,4'-oxydibenzoïque.

7. Copolyester selon la revendication 1, dans lequel lesdits motifs répétitifs glycols dérivent de 1,4-butanediol et de jusqu'à 10 % en moles d'au moins un autre glycol ayant de 2 à 16 atomes de carbone.

8. Copolyester selon la revendication 7, dans lequel ledit autre glycol est choisi parmi le 1,3-propanediol, le néopentylglycol, le cis-2,2,4,4-tétraméthyl-1,3-cyclobutanediol, le trans-2,2,4,4-tétraméthyl-1,3-cyclobutanediol, le trans-1,5-pentanediol, le 1,6-hexanediol, le cis-1,4-cyclohexanediméthanol, le trans-1,4-cyclohexanediméthanol, le p-xylèneglycol, les polyéthylèneglycols et les polytétraméthylèneglycols.

9. Composition comprenant :
(i) de 95 à 5 % en poids du copolyester selon la revendication 1, et
(ii) de 5 à 95 % en poids d'au moins un modifiant de propriété.

10. Composition selon la revendication 9, dans laquelle (i) est présent en une quantité comprise entre 90 et 10 % en poids, et (ii) est présent en une quantité comprise entre 10 et 90 % en poids.

11. Composition selon la revendication 9, dans laquelle le modifiant de propriété est choisi parmi le nylon 6,6, les poly(éthers imides), les poly(oxydes de phénylène), les mélanges de poly(oxyde de phénylène) et de polystyrène, d'autres polyesters, les poly(sulfures de phénylène), les mélanges de poly(sulfure de phénylène) et de sulfones, les poly(esters carbonates), les polycarbonates, les polysulfones, les poly(éthers sulfones) et les poly(éthers cétones) de composés dihydroxylés aromatiques.

12. Composition selon la revendication 9, dans laquelle le modifiant de propriété est choisi parmi les retardateurs d'inflammation, les charges et les agents de renforcement.

13. Composition selon la revendication 9, dans laquelle le modifiant de propriété est choisi parmi les composés du phosphore retardateurs d'inflammation, les composés halogénés retardateurs d'inflammation, le talc, le mica, les fibres de verre, les fibres de Kevlar et les fibres de carbone.

14. Fibre comprenant le polyester selon la revendication 1.

15. Film comprenant le polyester selon la revendication 1.

16. Objet moulé comprenant le polyester selon la revendication 1.
